# EUROPÄISCHE PATENTSCHRIFT

(11) **EP 3 368 363 B1**
(45) Veröffentlichungstag und Bekanntmachung des Hinweises auf die Patenterteilung: **17.07.2019**
(21) Anmeldenummer: 16760068.3
(22) Anmeldetag: 01.09.2016
(51) Int. Cl.: B60K 15/03, B60K 15/035, F02M 25/08

(54) **VERFAHREN ZUM ÜBERPRÜFEN DER DICHTHEIT EINER KRAFTSTOFFVERSORGUNGSANLAGE**
METHOD FOR CHECKING THE TIGHTNESS OF A FUEL SUPPLY SYSTEM
PROCÉDÉ DE CONTRÔLE DE L'ÉTANCHÉITÉ D'UN SYSTÈME D'ALIMENTATION EN CARBURANT

(30) Priorität: 28.10.2015 DE 102015221055
(43) Veröffentlichungstag der Anmeldung: 05.09.2018
(73) Patentinhaber: Bayerische Motoren Werke Aktiengesellschaft, 80809 München (DE)
(72) Erfinder: ARRAS, Emmanuel, 80637 München (DE); HUBER, Markus, 80995 München (DE)
(86) Internationale Anmeldenummer: PCT/EP2016/070667
(87) Internationale Veröffentlichungsnummer: WO 2017/071858

(56) Entgegenhaltungen:
- WO-A1-01/69073
- WO-A1-2016/012284
- DE-A1-102008 046 586
- DE-A1-102012 212 109
- DE-A1-102013 209 716
- US-A- 5 460 135
- US-A- 5 925 817

## Beschreibung

Die Erfindung betrifft ein Verfahren zum Überprüfen der Dichtheit einer Kraftstoffversorgungsanlage eines Kraftfahrzeugs mit einem Kraftstofftank, in dessen Innenraum ein Volumenveränderungselement vorgesehenen ist, dessen sog. Ausgleichs-Volumen üblicherweise und insbesondere unter Zwischenschaltung einer Speichereinheit für gasförmige Kraftstoffbestandteile mit der Umgebung in Verbindung steht, während der mit Kraftstoff für einen Verbraucher befüllbare Innenraum des Kraftstofftanks über eine Ventileinheit, welche üblicherweise beim Befüllen des Kraftstofftanks sowie bei Überschreiten eines Überdruck-Grenzwertes in der Größenordnung von bis zu 100 mbar und bei Unterschreiten eines Unterdruck-Grenzwertes ("Überdruck" und "Unterdruck" bezieht sich auf die Differenz zwischen dem Druck im Tank-Innenraum und dem Umgebungsdruck) geöffnet und ansonsten geschlossen ist, mit der Umgebung verbindbar ist. In der WO2016/012284, Stand der Technik nach Artikel 54 (3) EPÜ, ist eine solche Kraftstoffversorgungsanlage beschrieben.

Die gesetzlichen Anforderungen, welche an die Emissionsfreiheit von Kraftfahrzeug-Tanksystemen gestellt werden, sind mittlerweile extrem hoch. Unter nahezu sämtlichen denkbaren Umständen sollen unter Berücksichtigung unterschiedlicher länderspezifischer Vorschriften (die verschiedenen Staaten der Welt erlassen unterschiedliche Vorschriften) praktisch keine gasförmigen Kraftstoffbestandteile (üblicherweise handelt es sich hierbei um Kohlenwasserstoffe) aus dem Innenraum des Tanks in die Umgebung gelangen. Solche gasförmigen Kraftstoffbestandteile fallen in besonders großer Menge bekanntlich beim Befüllen des Kraftstoff-Tanks mit frischem Kraftstoff an, aber auch bei längerem Stillstand des Kraftfahrzeugs als Folge einer Temperaturerhöhung. In Verbindung mit letztgenanntem kennt der Fachmann den Begriff der "diurnal losses", d.h. der/die Verluste von gasförmigen Kraftstoffbestandteilen bzw. der/die Menge von gasförmigen Kohlenwasserstoff-Emissionen, welche bei längerem Stillstand des Kraftfahrzeugs aufgrund von Temperaturschwankungen (bspw. resultierend durch den Wechsel zwischen Tag und Nacht) aus dem Tank-Innenraum abgeführt werden müssen, um das Entstehen von unzulässig hohem Überdruck im Tank-Innenraum zu vermeiden. Abgeführt werden müssen aber auch Kohlenwasserstoff-Emissionen, die sich aufgrund von Temperaturänderungen im Betrieb des Kraftfahrzeugs im Tank bilden, wobei jeweils die Einhaltung des Dampfdruckgleichgewichts im Tank zu solchen Emissionen führt. Bekanntlich werden zumindest diese nicht beim Befüllen des Kraftstofftanks anfallenden Emissionen in einem Aktivkohlefilter oder dgl., welches vorliegend allgemein als Speichereinheit für gasförmige Kraftstoffbestandteile bezeichnet wird, solange zwischengespeichert, bis eine aus dem Kraftstofftank mit Kraftstoff versorgte (und üblicherweise als Fahrzeug-Antriebsaggregat vorgesehene) Brennkraftmaschine geeignet in Betrieb genommen wird, so dass dann diese Speichereinheit gespült werden kann, wobei die darin zwischengespeicherten Kraftstoffbestandteile der Brennkraftmaschine zur Verbrennung zugeführt werden. Der Vollständigkeit halber sei noch erwähnt, dass es länderspezifisch entweder üblich ist, die beim Befüllen des Tanks anfallenden Kohlenwasserstoff-Emissionen entweder während des Befüllens an der Tankstelle selbst abzusaugen (so bspw. in der Europäischen Union = "ECE-System") oder ebenfalls in einem dann ausreichend groß dimensionierten Aktivkohlefilter bzw. einer entsprechenden Speichereinheit (als ORVR = Onboard refueling vapor recovery bspw. in den USA vorgeschrieben) zu speichern.

Im Hinblick auf eine Vermeidung der geschilderten "diurnal losses" oder sonstiger betriebsbedingter Kohlenwasserstoffemissionen sind bereits Drucktanks vorgeschlagen oder in Serie, in welchen ein entsprechend hoher Überdruck (sowie ein geringer Unterdruck) herrschen kann, so dass von extremen Ausnahmefällen abgesehen keine Abfuhr von Kraftstoffdämpfen aus dem Tank erfolgen muss, jedoch sind solche Drucktanks sehr aufwändig. Weiterhin bekannt sind Maßnahmen zur Verringerung des Entstehens von gasförmigen Kraftstoffbestandteilen im Tank-Innenraum, insbesondere in Verbindung mit einem Befüllvorgang des Kraftstofftanks, vgl. bspw. die US 5,460,135. Für die USA gilt nämlich, dass sämtliche beim Befüllen eines Fahrzeug-Kraftstofftanks anfallenden gasförmigen Kohlenwasserstoffemissionen in einer fahrzeugeigenen Speichereinheit für gasförmige Kraftstoffbestandteile zwischengespeichert werden müssen. Um deren Menge zu reduzieren, ist in dieser genannten Schrift im Kraftstofftank ein flexibler Luftbeutel vorgesehen, welcher bei vollständig mit Kraftstoff befülltem Tank sein minimales Volumen besitzt und bei Entnahme von flüssigem Kraftstoff aus dem Tank kontinuierlich mit Umgebungsluft befüllt wird, während ein Entleeren dieses Luftbeutels verhindert wird. Damit kann sich oberhalb des Flüssigkeitsspiegels im Tank naturgemäß nur eine geringere Menge von Kraftstoffdämpfen bilden als in einem ansonsten gleichen Tank ohne einen derartigen Luftbeutel. In Zusammenhang mit einem neuerlichen Befüllen des Tanks wird dieser Luftbeutel dann durch den Speicherbehälter bzw. Aktivkohlefilter hindurch in die Umgebung entleert.

In der eingangs genannten WO2016/012284 ist eine Kraftstoffversorgungsanlage beschrieben, deren Funktionsprinzip auf der Erkenntnis aufbaut, dass aufgrund des Dampfdruck-Gleichgewichts in einem Kraftstofftank, welcher nahezu vollständig mit flüssigem Kraftstoff befüllt ist, oberhalb des Flüssigkeitsspiegels weniger gasförmige Kraftstoffbestandteile entstehen, als im gleichen Kraftstofftank, wenn dieser nur noch bspw. zur Hälfte oder noch weniger befüllt ist. Folglich kann mit einem flexiblen Luft-Beutel oder dgl., welcher oberhalb des durch flüssigen Kraftstoff im Tank-Innenraum gebildeten Flüssigkeitsspiegels vorgesehen ist, die Menge von im Tank-Innenraum in den gasförmigen Zustand übergehenden Kraftstoffbestandteilen verringert werden. In dieser besagten Patentanmeldung und auch vorliegend wird nun im Weiteren anstelle eines "Luft-Beutels" verallgemeinernd von einem Volumenveränderungselement gesprochen, welches Innenraum des Tanks angeordnet ein veränderliches Ausgleichsvolumen besitzt bzw. einschließt, welches mit der Umgebung in Verbindung steht bzw. stehen kann. So kann das Volumenveränderungselement quasi atmen, d.h. sich bedarfsgerecht vergrößern oder verkleinern und damit auf geänderte Randbedingungen reagieren.

Eine (weitere) gesetzliche Zulassungsvorschrift für Kraftfahrzeuge beispielsweise in den Vereinigten Staaten von Amerika ist, dass der gesamte Bereich der Kraftstoffversorgungsanlage, in welchem gasförmige Kraftstoffbestandteile vorliegen können, selbsttätig regelmäßig auf Dichtheit überprüft wird. Üblicherweise werden solche Dichtheitstests durch eine elektronische Steuereinheit bei jedem oder bei jedem zweiten Fahrzyklus des Kraftfahrzeugs durchgeführt. Dabei muss eine Undichtigkeitsstelle, bspw. in Form eines Loches mit einem Durchmesser von nur 0,5 mm, sofort entdeckt werden, und es muss die Existenz einer solchen Undichtigkeitsstelle dem Nutzer des Kraftfahrzeugs angezeigt werden. Hierfür wird gemäß üblichem Stand der Technik in demjenigen Bereich der Kraftstoffversorgungsanlage, in welchem gasförmige Kraftstoffbestandteile vorliegen können, der Druck und die Temperatur (der in diesem Bereich befindlichen Gase oder bei Anordnung von Sensoren in einem oberen Bereich des Kraftstofftanks, falls dieser vollständig befüllt ist, auch des dort befindlichen flüssigen Kraftstoffs) mittels geeigneter Sensoren über einen gewissen Zeitraum hinweg erfasst, wobei zu diesem besagten Bereich auch der Kraftstoffdampf-Zwischenspeicher gehört.

Hiermit soll nun für eine Kraftstoffversorgungsanlage gemäß der vorgenannten WO2016/012284 ein geeignetes Verfahren zum Überprüfen von deren Dichtheit aufgezeigt werden (= Aufgabe der vorliegenden Erfindung).

Die Lösung dieser Aufgabe ist ein Verfahren nach dem Anspruch 1 wobei, mittels einer Gas-Fördervorrichtung bei mit der Umgebung verbundenem Volumenveränderungselement im Tank-Innenraum ein Differenzdruck gegenüber Umgebung erzeugt wird, und durch Schalten eines geeigneten Absperrventiles gehalten und über eine gewisse Zeitspanne überwacht oder nach einer gewissen Zeitspanne kontrolliert wird, und wobei dann, wenn der Differenzdruck nach dieser Zeitspanne noch einen gewissen Schwellwert überschreitet, auf eine ausreichende Dichtheit der Kraftstoffversorgungsanlage geschlossen wird. Im Umkehrschluss kann dann, wenn der Differenzdruck den Schwellwert nicht überschreitet, direkt auf eine Undichtigkeit geschlossen werden, jedoch besteht auch die Gefahr von Fehlmessungen oder anderen Störeinflüssen, weshalb im Sinne einer vorteilhaften Weiterbildung der Erfindung vorgeschlagen wird, dass dann, wenn der Differenzdruck nach der besagten Zeitspanne unterhalb des genannten Schwellwertes liegt, die vorstehend beschriebene Überprüfungs-Routine nochmals durchgeführt wird und erst dann auf eine nicht ausreichende Dichtheit der Kraftstoffversorgungsanlage geschlossen wird, wenn aufeinanderfolgend eine bestimmte Anzahl solcher Überprüfungsroutinen durchgeführt worden sind, welche nicht eine ausreichende Dichtheit der Kraftstoffversorgungsanlage ergeben. Diese bestimmte Anzahl liegt vorzugsweise in der Größenordnung von 2 - 4.

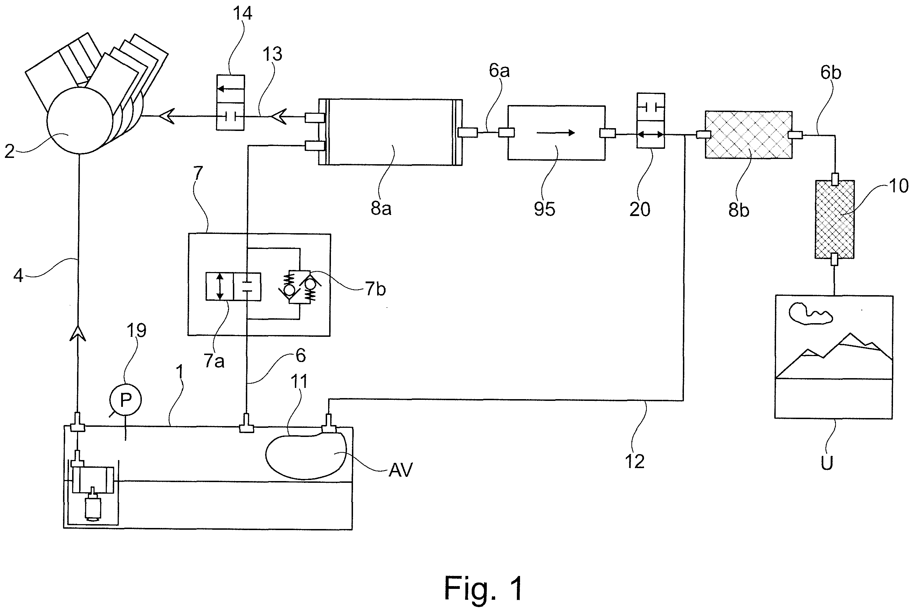

Eine für die vorliegende Erfindung relevanten Kraftstoffversorgungsanlage ist z.B. aus WO2016/012284 bekannt. Daher im weiteren ein Ausführungsbeispiel für die vorliegende Erfindung ausgehend von einer Kraftstoffstoffversorgungsanlage beschrieben, die in Figur 1 der vorstehend genannten WO2016/012284 beschrieben ist.

Erfindungsgemäß erfolgt eine Dichtheitsprüfung einer solchen oder einer dieser vergleichbaren Kraftstoffversorgungsanlage dadurch, dass mittels einer Gas-Fördervorrichtung (insbesondere in Form einer elektromotorisch angetriebenen Luftpumpe) nur in demjenigen Teil des zu überprüfenden Bereichs der Kraftstoffversorgungsanlage ein Differenzdruck gegenüber Umgebungsdruck erzeugt wird, welcher auch bei einer herkömmlichen Kraftstoffversorgungsanlage, die kein Volumenveränderungselement im Tank aufweist, auf Dichtheit überprüft werden muss. Hierzu zählt insbesondere auch der Kraftstofftank selbst, so dass in dessen mit Kraftstoff befüllbarem Rauminhalt ein Differenzdruck gegenüber Umgebungsdruck erzeugt wird. Daraufhin wird die Gas-Fördervorrichtung abgeschaltet und dieser erzeugte Differenzdruck (bspw. Unterdruck) durch Schließen geeigneter Ventile quasi eingesperrt. Falls dieser mit Unterdruck beaufschlagte Teil der Kraftstoffversorgungsanlage dicht ist, so sollte dieser Differenzdruck für eine gewisse Zeitspanne bestehen bleiben, weshalb der Wert dieses Differenzdrucks (bspw. Unterdrucks) zumindest nach Ablauf einer gewissen (vorgegebenen) Zeitspanne erneut abgefragt bzw. überprüft wird.

Dieser für die Dichtheitsprüfung mit einem Differenzdruck (gegenüber Umgebungsdruck) beaufschlagte Teil der Kraftstoffversorgungsanlage kann nun entweder in einem Leitungsabschnitt oder am Kraftstoffdampf-Zwischenspeicher oder an einer anderen Stelle undicht sein und dort mit der Umgebung in Verbindung stehen, wodurch der besagte Differenzdruck abgebaut werden würde. Es kann dieser mit einem Differenzdruck beaufschlagte Teil der Kraftstoffversorgungsanlage aber auch über das Volumenveränderungselement, welches erfindungsgemäß seinerseits mit der Umgebung verbunden ist, mit der Umgebung verbunden sein, wenn eine Wand oder Hüllwand (oder dgl.) des Volumenveränderungselements, die dessen Ausgleichsvolumen begrenzt und vom mit Kraftstoff befüllbaren Restraum des Tanks trennt, undicht ist. Dann würde nämlich ein Druckausgleich über bzw. durch dieses Volumenveränderungselement erfolgen. Gleichzeitig und ohne zusätzlichen Aufwand kann somit auf besonders einfache Weise die Dichtheit des Volumenveränderungselements selbst überprüft werden.

Falls dann eine Änderung des Differenzdruck-Wertes innerhalb der besagten gewissen Zeitspanne unterhalb eines bestimmten geeignet vorgegebenen Druck-Betrages liegt, kann der zu überprüfende Bereich der Kraftstoffversorgungsanlage als ausreichend dicht betrachtet werden; andernfalls besteht begründeter Verdacht auf Undichtigkeit. Der zu überprüfende bzw. mit diesem Verfahren überprüfte Bereich der Kraftstoffversorgungsanlage umfasst dabei den Tank einschließlich des Volumenveränderungselements sowie eine grundsätzlich übliche Speichereinheit für Kraftstoffdämpfe und deren Spülleitung.

Wie bereits erwähnt wurde, kann der vorstehend genannte begründete Verdacht auf Undichtigkeit weiter erhärtet werden, wenn das soweit geschilderte Überprüfen, nämlich die Erzeugung und Überwachung der Aufrechterhaltung von Differenzdruck, bei welchem es sich übrigen um Überdruck oder Unterdruck gegenüber Umgebungsdruck handeln kann, mehrfach direkt aufeinander folgend durchgeführt wird und jedes Mal in einem Verdacht von Undichtigkeit resultiert. Beispielsweise nach drei aufeinanderfolgenden erfindungsgemäßen Überprüfungsroutinen, die nicht eine ausreichende Dichtheit ergeben, kann trotz der Möglichkeit von Fehlmessungen oder ungünstigen Randbedingungen von einer Leckage ausgegangen werden. Hingegen kann dann, wenn nur einmal eine ausreichende Dichtheit festgestellt wurde, mit Sicherheit auf ausreichende Dichtheit geschlossen werden, da es vereinfacht ausgedrückt wesentlich komplizierter ist, Dichtheit darzustellen als eine Undichtigkeit. Im Übrigen kann das erfindungsgemäße Verfahren immer dann durchgeführt werden, wenn dies angebracht oder (bspw. gesetzlich) erforderlich ist.

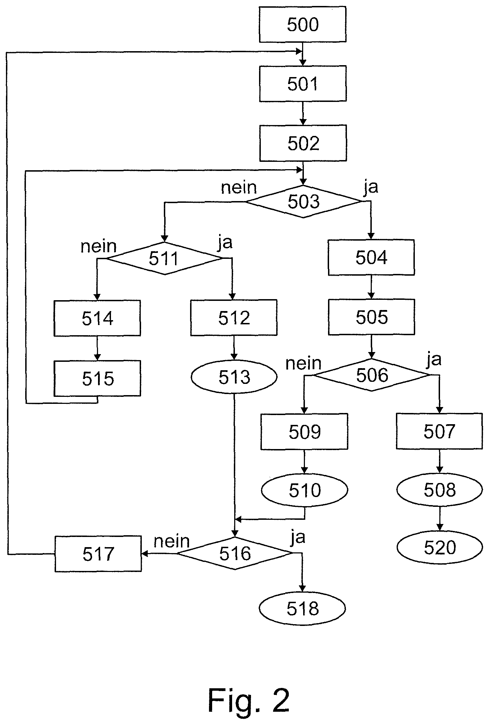

Im Sinne eines Ausführungsbeispiels zeigt die beigefügte **Figur 1** (angelehnt an Fig.1 der o.g. WO2016/012284 und unter Verwendung der dortigen Bezugsziffern) in einer Prinzipdarstellung eine Kraftstoffversorgungsanlage, bei der ein erfindungsgemäßes Dichtheits-Überprüfungsverfahren durchgeführt wird bzw. durchgeführt werden kann, welches als Ablaufdiagramm eines in einer elektronischen Steuereinheit installierten Computerprogramms in **Figur 2** dargestellt ist. Im Ablaufdiagramm (Fig.2) stellen Rechtecke Aktionen (der elektronischen Steuereinheit) dar, während mit einer Raute eine (von der Steuereinheit) durchgeführte Abfrage und mit einer Ellipse ein (von der Steuereinheit) aufgefundenes Ergebnis gekennzeichnet ist. Die Ziffern 500 folgende stehen für einzelne im weiteren beschriebene Verfahrens-Schritte.

Zunächst auf **Fig.1** Bezug nehmend trägt ein Tank bzw. Kraftstoff-Tank eines Kraftfahrzeugs die Bezugsziffer 1 und eine aus diesem Tank mit Kraftstoff versorgte Brennkraftmaschine die Bezugsziffer 2. Zu dieser gelangt der mittels einer im Tank 1 vorgesehenen (nicht gezeigten) Pumpeneinheit geförderte Kraftstoff über eine Versorgungsleitung 4. Der Einfachheit halber nicht gezeigt ist ein Befüllstutzen, über den Kraftstoff in den Tank 1 nachgefüllt werden kann.

Eine Tankentlüftungsleitung 6 führt vom Innenraum des Tanks 1 durch eine Ventileinheit 7 zu einer ersten mit einem Adsorptionsmittel für gasförmige Kraftstoffbestandteile befüllten Speichereinheit 8a bzw. es mündet die Entlüftungsleitung 6 im Innenraum einer als sog. Aktivkohlefilter fungierenden mit der Bezugsziffer 8a gekennzeichneten Speichereinheit für gasförmige und über die Entlüftungsleitung 6 bei geöffneter Ventileinheit 7 aus dem Tank-Innenraum abgeführte gasförmige Kraftstoffbestandteile. Am anderen Ende dieser ersten Speichereinheit 8a setzt sich die Entlüftungsleitung 6 als Leitung 6a fort und mündet nach Passieren einer Gas-Fördervorrichtung 95, welche derart ausgebildet ist, dass auch bei nicht in Betrieb genommener Gas-Fördereinrichtung 95 ein Gasstrom durch diese hindurch strömen kann, sowie eines Absperr-Ventils 20 in einer zweiten auch als "Honeycomb" oder "Low-Bleed-Emission-Aktivkohlefilter" bezeichneten Speichereinheit 8b für gasförmige Kraftstoffbestandteile, welche ebenfalls eine Aktivkohle, jedoch mit anderen Speichereigenschaften enthält. Aus dieser zweiten Speichereinheit 8b austretend führt die Tankentlüftungsleitung 6 als Leitung 6b weiter durch ein Staubfilter 10 in die Umgebung U. Weiterhin ist ein Drucksensor 19 vorgesehen, mit welchem der Innendruck im Tank 1 gemessen werden kann. Im Innenraum des Tanks 1 ist ein hier als flexible und auch elastisch verformbare Blase ausgeführtes Volumenveränderungselement 11 vorgesehen, das in sich ein Ausgleichs-Volumen AV einschließt, welches über eine Belüftungsleitung 12 mit der Umgebung U in Verbindung gebracht werden kann bzw. üblicherweise mit der Umgebung in Verbindung steht. Hierfür durchdringt die im Ausgleichs-Volumen AV des Volumenveränderungselements 11 mündende Belüftungsleitung 12 die Wand des Tanks 1 und mündet schließlich in der Leitung 6a, welche wie bereits erläutert die erste Speichereinheit 8a mit der zweiten Speichereinheit 8b verbindet. Damit ist diese Belüftungsleitung 12 durch die Speichereinheit 8b für gasförmige Kraftstoffbestandteile hindurch mit der Umgebung U verbunden. Die Funktion des Volumenveränderungselements 11 ist in der vorliegenden Beschreibungseinleitung kurz und in der bereits mehrfach genannten WO2016/012284 ausführlich erläutert. Letzteres gilt auch für die Funktion der auch als Niederdruck-Tankabsperrventil bezeichneten Ventileinheit 7, welche hier durch eine Parallelschaltung zweier Ventilelemente 7a, 7b gebildet ist.

Beim ersten Ventilelement 7a handelt es sich um ein von einer elektronischen Steuereinheit ansteuerbares Sperrventil, das üblicherweise beim Betanken (= Befüllen das Tanks 1 mit frischem Kraftstoff) und bei Überschreitung eines vorgegebenen Grenzdrucks im Tank 1 in seine Offenstellung gebracht wird und ansonsten geschlossen ist. Insbesondere im Hinblick auf das Vermeiden einer Grenzdruck-Überschreitung (sowohl bezüglich Überdruck als auch bezüglich Unterdruck) wird das erste Ventilelement 7a von einem die Temperatur T im Tank 1 messenden Sensor *(nicht gezeigt)* in Kombination mit dem den Druck P im Tank 1 messenden Sensor 19 geeignet angesteuert, während ein bevorstehender oder durchgeführter Betankungsvorgang beispielsweise über eine vom Nutzer des Kraftfahrzeugs zu betätigende Betankungswunschtaste oder einen Tankklappensensor erkannt werden kann.

Beim zweiten Ventilelement 7b handelt es sich hier um eine Paarung von parallel geschaltet einander entgegen gerichteten Rückschlagventilen, welche erst bei Vorliegen eines Mindestdrucks selbsttätig öffnen. Diese Rückschlagventile bzw. dieses zweite Ventilelement 7b sind/ist solchermaßen ausgelegt, dass diese erst bei Druckwerten im Innenraum des Tanks 1 (abseits des Volumenveränderungselements 11), welche betragsmäßig um bspw. 100 mbar vom in der Umgebung herrschenden Druck beabstandet sind, öffnen bzw. öffnet, d.h. dieses zweite (dem ersten Ventilelement 7a funktional parallel geschaltete) Ventilelement 7b der Ventileinheit 7 öffnet dann, wenn im Tank-Innenraum entweder ein Überdruck von ca. 100 mbar herrscht, wonach Kraftstoffdämpfe aus dem Tank-Innenraum in die beiden Speichereinheiten 8a, 8b gelangen, wo die gasförmigen Kraftstoffbestandteile zurückgehalten werden, während die Luft in die Umgebung U gelangt, welcher Überdruck damit abgebaut wird, oder wenn im Tank-Innenraum ein Unterdruck von bspw. ca. 100 mbar herrscht, wonach Luft aus der Umgebung durch die Speichereinheiten 8a, 8b in den Tank-Innenraum gelangt, welcher Unterdruck damit abgebaut wird. Abweichend von vorstehender Erläuterung können die Rückschlagventile des Ventilelements 7b hinsichtlich ihres Öffnens aber auch auf verschiedene Differenzdruckwerte hin und/oder andere Absolutwerte ausgelegt sein, derart, dass das Ventilelement 7b vom Tank 1 zur Umgebung U (bzw. zur Speichereinheit 8a) hin erst dann öffnet, wenn im Tank ein Überdruck-Grenzwert von bspw. 70 mbar erreicht ist, während das Ventilelement 7b von der Umgebung U (bzw. von der Speichereinheit 8a) zum Tank 1 hin erst dann öffnet, wenn im Tank ein Unterdruck-Grenzwert erreicht ist, der betragsmäßig geringer oder nicht höher als der vorstehend genannte Überdruck-Grenzwert ist und bspw. in der Größenordnung von 30 mbar liegen kann. Die Größenordnung, innerhalb derer sinnvolle Druckwerte liegen, erstreckt sich in einem Bereich von circa 5 mbar bis ca. 100 mbar.

Bei Stillstand des Kraftfahrzeugs über eine praktisch unbegrenzte oder zumindest größere Zahl von Tagen hinweg soll jedoch an einem solchen Tanksystem diese Ventileinheit 7 überhaupt nicht öffnen. Vielmehr erfolgt dann die Kompensation des aufgrund unterschiedlicher Umgebungstemperaturen (insbesondere durch Tag und Nacht) unterschiedlichen Volumens des im Tank-Innenraum befindlichen Kraftstoffs bzw. von dessen Dampfdruckänderung alleine durch eine Volumenänderung des Volumenveränderungselements 11, welches hierfür über die (stets offene) Belüftungsleitung 12 sowie die zweite Speichereinheit 8b entweder Luft aus dem Ausgleichs-Volumen AV des Volumenveränderungselements 11 an die Umgebung abgibt oder aus der Umgebung U aufnimmt. Dieser Prozess des Sich-Ausdehnens des Volumenveränderungselements 11 bei einer Vergrößerung des Ausgleichs-Volumens AV bzw. des Sich-Verkleinerns des Volumenveränderungselements 11 bei einer Verringerung des Ausgleichs-Volumens AV durch Luftaustausch mit der Umgebung U kann sich bei geeigneter Dimensionierung der betroffenen Bauelemente praktisch unendlich fortsetzen, ohne dass eine zunehmende Verdunstung von Kraftstoff im Tank 1 ein Öffnen der Ventileinheit 7 erforderlich macht.

Im Übrigen erfolgt ein Spülen bzw. Regenerieren der Speichereinheiten 8a, 8b, welche neben der Aufnahme von durch die Wand des Volumenveränderungselements 11 in dessen Ausgleichs-Volumen AV hinein diffundierenden Kraftstoffbestandteilen insbesondere bei einer Betankung, d.h. Befüllung des Tanks 1 mit frischem Kraftstoff und ggf. bei Überschreiten von Druckgrenzwerten im Tank 1 mit Kraftstoffdämpfen beaufschlagt werden, wie bei heutigen Tanksystemen üblich. Bei in Betrieb befindlicher Brennkraftmaschine 2 gelangt für das Spülen der Speichereinheiten 8a, 8b Luft aus der Umgebung U über die Leitung 6b in die zweite Speichereinheit 8b und weiter durch die Leitung 6a und die erste Speichereinheit 8a durch eine Spülleitung 13, in der ein dann offenes, aber ansonsten geschlossenes Spülventil 14 vorgesehen ist, in die Brennräume der Brennkraftmaschine 2, wo die in den beiden Speichereinheiten 8a, 8b zuvor zwischengespeicherten und von der Spül-Luft mitgenommenen gasförmigen Kraftstoffbestandteile verbrannt werden.

Nach dieser Vor-Erläuterung wird nun anhand von Figur 2 eine erfindungsgemäße Prozedur oder Routine zum Überprüfen der Dichtheit des Kraftstoffversorgungsanlage nach Fig.1 beschrieben, die von einer elektronischen Rechen- und Steuereinheit wie folgt durchgeführt wird:
500 Start der Überprüfungsroutine, bspw. aufgrund einer Außerbetriebnahme oder Inbetriebnahme des Kraftfahrzeugs oder des Verbrauchers (bzw. Verbrennungsmotors 2); dabei wird ein Wiederhol-Zähler für eine Wiederholungsschleife dieser Überprüfungsroutine auf den Wert "0" (Null) gesetzt
501 die Ventileinheit 7, genauer dessen Ventilelement 7a, welches im stromlosen Zustand geschlossen ist, wird geöffnet
502 die Gas-Fördereinrichtung 95 wird in der in Fig.1 durch einen Pfeil dargestellten Förderrichtung in Betrieb genommen und fördert damit unter anderem durch das stromlos und somit üblicherweise offene Absperrventil 20 Luft aus dem (zumindest teilweise mit Kraftstoff befüllten) Innenraum des Tanks 1 heraus die Umgebung U, was aber unschädlich ist, da die aus dem Tank 1 abgeführte Luft zuvor durch die Speichereinheiten 8a, 8b geführt wird; dabei wird mit bzw. ab dieser Inbetriebnahme auch die zeitliche Betriebsdauer der Gas-Fördereinrichtung 95 gemessen
503 es wird geprüft, ob der mittels des Drucksensors 19 gemessene Unterdruck im Tank-Innenraum (gegenüber Umgebungsdruck) kleiner - 20 mbar ist; dabei bedeutet "kleiner", dass der Betrag des Unterdrucks größer als 20 Millibar ist
504 bejahendenfalls wird das Absperrventil 20 geschlossen und die Gas-Fördereinrichtung 95 still gesetzt
505 es wird eine vorgegebene Zeitspanne, bspw. in der Größenordnung von 1 Minute, abgewartet
506 es wird (mittels des Drucksensors 19) geprüft, ob im Kraftstofftank 1 noch ein Unterdruck von (bspw.) zumindest - 10 mbar (gegenüber Umgebungsdruck) vorliegt - dieser vorgegebene Betrag, der einen Schwellwert bezüglich des Ergebnisses des Überprüfungsverfahrens darstellt, liegt zwangsläufig unter dem im Verfahrensschritt 503 genannten bzw. berücksichtigten Betrag
507 bejahendenfalls wird zunächst das Absperrventil 20 geöffnet und bspw. eine Sekunde später wird das Ventilelement 7a der Ventileinheit 7 geschlossen, um den üblichen Betriebszustand wieder herzustellen
508 damit können der Kraftstoff-Tank 1 mit dem Volumenveränderungselement 11 sowie die Speichereinheit 8a und die zugehörigen Leitungen einschließlich der Spülleitung 13 als ausreichend dicht eingestuft werden, so dass gemäß dem folgenden Schritt 520 gesagt werden kann:
520 Die Überprüfungsroutine ist erfolgreich abgeschlossen.
509 Wird hingegen im Schritt 506 erkannt, dass der Druck im Tank-Innenraum oberhalb des dort vorgegebenen Werts von bspw. minus 10 mbar liegt (d.h. als Unterdruck betragsmäßig geringer als 10 mbar, also bspw. nur 2 mbar ist oder sogar Umgebungsdruck vorliegt), so wird zwar analog dem Schritt 507 der übliche Betriebszustand wieder hergestellt, aber es kann dann jedenfalls aus dieser zuvor durchgeführten Überprüfungsroutine nicht auf Dichtheit des den Kraftstoff-Tank 1 mit dem Volumenveränderungselement 11 sowie die Speichereinheit 8a und die zugehörigen Leitungen einschließlich der Spülleitung 13 umfassenden (und auf Dichtheit zu überprüfenden) Teilbereich der Kraftstoffversorgungsanlage geschlossen werden;
510 vielmehr wird anschließend an den Verfahrensschritt 509 zum Verfahrensschritt 516 gesprungen, welcher Bestandteil einer in der vollständigen Überprüfungsroutine vorgesehenen Wiederholungsschleife ist, die an späterer Stelle erläutert wird. Zuvor werden jedoch noch diejenigen Verfahrensschritte erläutert, die sich alternativ an den Verfahrensschritt 503 anschließen können:
511 Falls nämlich im Verfahrensschritt 503 festgestellt wird, dass der durch vorhergehende Inbetriebnahme der Gas-Fördervorrichtung 95 erzeugte Unterdruck im Tank-Innenraum den gewünschten Wert von bspw. minus 20 Millibar (noch) nicht erreicht hat (und somit betragsmäßig unterhalb diesem bleibt), so wird abgefragt, ob die Gas-Fördervorrichtung 95 bereits seit (bspw.) 60 Sekunden in Betrieb ist, d.h. ob seit Ausführung des Verfahrensschrittes 502 bereits 60 Sekunden vergangen sind
512 bejahendenfalls wird die Gas-Fördereinrichtung 95 still gesetzt, da davon ausgegangen werden kann, dass der gewünschte Druckaufbau im Tank 1 wegen irgendeiner Undichtigkeit nicht erfolgen kann
513 da jedenfalls aus dieser zuvor durchgeführten Überprüfungsroutine nicht auf Dichtheit des den Kraftstoff-Tank 1 mit dem Volumenveränderungselement 11 sowie die Speichereinheit 8a und die zugehörigen Leitungen einschließlich der Spülleitung 13 umfassenden (und auf Dichtheit zu überprüfenden) Teilbereich der Kraftstoffversorgungsanlage geschlossen werden kann, wird zum (weiter oben bereits kurz erwähnten) Verfahrensschritt 516 gesprungen, der Bestandteil einer in der vollständigen Überprüfungsroutine vorgesehenen Wiederholungsschleife ist.
514 wird hingegen im Verfahrensschritt 511 festgestellt, dass die Gas-Fördervorrichtung 95 noch weniger als 60 Sekunden in Betrieb ist, wird ein Zeitzähler für deren Betriebsdauer um den Wert "1" erhöht und es wird im folgenden Verfahrensschritt
515 die Gas-Fördervorrichtung 95 für eine Sekunde weiter betrieben, wonach zum Verfahrensschritt 503 zurückgegangen wird, in welchem die Abfrage erfolgt, ob der mittels des Drucksensors 19 gemessene Unterdruck im Tank-Innenraum betragsmäßig größer als bspw. 20 Millibar ist
516 In der bereits genannten Wiederholungsschleife wird abgefragt, wie oft die vorstehend erläuterte, d.h. aus den Verfahrensschritten 501 bis 515 bestehende Überprüfungsroutine (soweit als die einzelnen Schritte überhaupt durchgeführt werden mussten) bereits durchgeführt wurde, nämlich ob der ursprünglich im Verfahrensschritt 500 auf den Wert "0" gesetzte Wiederhol-Zähler mittlerweile einen Wert größer "2" hat.
517 verneinendenfalls, d.h. falls der Wiederhol-Zähler noch einen der Werte "0" oder "1" oder "2" hat, wird dieser Wiederhol-Zähler um den Wert "1" erhöht und es wird zum Verfahrensschritt 501 gesprungen, um die Verfahrensschritte 501 bis ggf. 515 der Überprüfungsroutine sicherheitshalber, d.h. um die Aussagekraft der Überprüfungsroutine zu steigern, ein weiteres Mal durchzuführen
518 wird hingen im Verfahrensschritt 516 festgestellt, dass der Wiederhol-Zähler den Wert "3" besitzt (und somit größer als "2" ist), so wird die vollständige Überprüfungsroutine abschließend der zu überprüfende und aus dem Kraftstoff-Tank 1 mit dem Volumenveränderungselement 11 sowie der Speichereinheit 8a und den zugehörigen Leitungen einschließlich der Spülleitung 13 bestehende Bereich der Kraftstoffversorgungsanlage als nicht ausreichend dicht eingestuft und es wird dies bspw. dem Nutzer des Kraftfahrzeug wie bislang üblich mitgeteilt.

## Patentansprüche

1. Verfahren zum Überprüfen der Dichtheit einer Kraftstoffversorgungsanlage eines Kraftfahrzeugs mit einem Kraftstofftank (1), in dessen Innenraum ein Volumenveränderungselement (11) vorgesehenen ist, dessen sog. Ausgleichs-Volumen unter Zwischenschaltung einer Speichereinheit (8b) für gasförmige Kraftstoffbestandteile mit der Umgebung (U) in Verbindung steht, während der mit Kraftstoff für einen Verbraucher (2) befüllbare Innenraum des Kraftstofftanks (1) über eine Ventileinheit (7), welche beim Befüllen des Kraftstofftanks (1) sowie bei Überschreiten eines Überdruck-Grenzwertes in der Größenordnung von bis zu 100 mbar und bei Unterschreiten eines Unterdruck-Grenzwertes zwischen dem Druck im Tank-Innenraum und dem Umgebungsdruck geöffnet und ansonsten geschlossen ist, mit der Umgebung (U) verbindbar ist, wobei mittels einer Gas-Fördervorrichtung (95) bei mit der Umgebung (U) verbundenem Volumenveränderungselement (11) im Tank-Innenraum ein Differenzdruck gegenüber Umgebung erzeugt wird, und durch Schalten eines geeigneten Absperrventiles (20) gehalten und über eine gewisse Zeitspanne überwacht oder nach einer gewissen Zeitspanne kontrolliert wird, und wobei dann, wenn der Differenzdruck nach dieser Zeitspanne noch einen gewissen Schwellwert überschreitet, auf eine ausreichende Dichtheit der Kraftstoffversorgungsanlage geschlossen wird.

2. Verfahren nach Anspruch 1, wobei dann, wenn der Differenzdruck nach der besagten Zeitspanne unterhalb des genannten Schwellwertes liegt, die vorstehend beschriebene Überprüfungs-Routine nochmals durchgeführt wird und erst dann auf eine nicht ausreichende Dichtheit der Kraftstoffversorgungsanlage geschlossen wird, wenn aufeinanderfolgend eine bestimmte Anzahl in der Größenordnung von 2 - 4 solcher Überprüfungsroutinen durchgeführt worden sind, welche nicht eine ausreichende Dichtheit der Kraftstoffversorgungsanlage ergeben.

## Claims

1. A method for testing the leak-tightness of a fuel supply system of a motor vehicle having a fuel tank (1) in the interior of which a volume-changing element (11) is provided, the so-called compensation volume of which is connected to the surroundings (U) with a storage unit (8b) for gaseous fuel constituents being positioned in-between, whilst the interior of the fuel tank (1), which is fillable with fuel for a consumer (2), is connectable to the surroundings (U) by way of a valve unit (7) which is opened during filling of the fuel tank (1) and in the event that a positive-pressure threshold value in the region of up to 100 mbar is exceeded and in the event that a negative-pressure threshold value between the pressure in the tank interior and the ambient pressure is undershot, and is otherwise closed, wherein, by means of a gas-conveying device (95), a differential pressure in relation to the surroundings is generated in the tank interior when the volume-changing element (11) is connected to the surroundings (U) and is held by switching of a suitable shut-off valve (20) and is monitored over a certain period of time or is inspected after a certain period of time, and wherein, if the differential pressure still exceeds a certain threshold valve after this period of time, the leak-tightness of the fuel supply system is deemed to be adequate.

2. A method according to claim 1, wherein, if the differential pressure lies below said threshold value after said period of time, the above-described testing routine is performed again and the leak-tightness of the fuel supply system is deemed to be inadequate only if a certain number, in the order of 2-4, of such testing routines which reveal inadequate leak-tightness of the fuel supply system have been performed in succession.

## Revendications

1. Procédé permettant de contrôler l'étanchéité d'une installation d'alimentation en carburant d'un véhicule comprenant un réservoir de carburant (1) dans le volume interne duquel est prévu un élément de modification du volume (11) dont le volume d'équilibrage est en liaison avec l'environnement (U) avec interposition d'une unité d'accumulation (8b) des composants gazeux du carburant, tandis que le volume interne du réservoir de carburant (1) pouvant être rempli de carburant destiné à un consommateur (2) peut être relié à l'environnement par l'intermédiaire d'une unité de soupape (7), qui est ouverte lors du remplissage du réservoir de carburant (1) et lorsque la pression entre le volume interne du réservoir et l'environnement dépasse une valeur limite de surpression de l'ordre de jusqu'à 100mbar, et passe au-dessous d'une valeur limite de dépression, et est si non fermé, selon lequel, au moyen d'un dispositif de refoulement de gaz (95), lorsque l'élément de modification du volume (11) est relié à l'environnement (U) dans le volume interne du réservoir, une pression différentielle vis-à-vis de l'environnement est produite, est maintenue par commutation d'une soupape d'arrêt (20) adaptée, et surveillée pendant une durée donnée, ou est contrôlée après une durée donnée, puis, lorsque après cette durée, la pression différentielle dépasse encore une valeur de seuil donnée, on conclut à une étanchéité suffisante de l'installation d'alimentation en carburant.

2. Procédé conforme à la revendication 1,
selon lequel, lorsque, après la durée susmentionnée, la pression différentielle est située au-dessous de la valeur de seuil susmentionnée, la routine de contrôle décrite ci-dessus est encore une fois effectuée, et on ne conclut à une étanchéité insuffisante de l'installation d'alimentation en carburant que lorsqu'un nombre déterminé de l'ordre 2 à 4 de telles routines de contrôle n'ayant pas relevé une étanchéité suffisante de l'installation d'alimentation en carburant a été successivement effectué.
